# EUROPÄISCHE PATENTSCHRIFT

(11) **EP 2 429 266 B1**
(45) Veröffentlichungstag und Bekanntmachung des Hinweises auf die Patenterteilung: **22.07.2020**
(21) Anmeldenummer: 11187222.2
(22) Anmeldetag: 10.01.2006
(51) Int. Cl.: H05B 41/392, H05B 41/40, H05B 47/105

(54) **Dimmen von Leuchtmittelbetriebsgeräten auf vorab definierte Pegel**
Dimming of light operating devices to pre-defined levels
Atténuation d'appareils de fonctionnement de moyens d'éclairage vers un seuil prédéfini

(30) Priorität: 21.01.2005 DE 102005002973; 28.02.2005 DE 102005008996
(43) Veröffentlichungstag der Anmeldung: 14.03.2012
(62) Teilanmeldung aus: 06702652.6
(73) Patentinhaber: Tridonic GmbH & Co KG, 6851 Dornbirn (AT)
(72) Erfinder: Juen, Reinhold, 6850 Dornbirn (AT); Maier, Joachim, 6840 Götzis (AT)
(74) Vertreter: Rupp, Christian

(56) Entgegenhaltungen:
- EP-A1- 0 542 425
- EP-A1- 0 734 197
- US-A- 5 357 170
- US-A- 5 519 289
- US-A- 5 668 446
- US-A1- 2003 179 578
- US-A1- 2003 222 588
- US-B1- 6 275 163

## Beschreibung

Die vorliegende Erfindung bezieht sich allgemein auf Verfahren und Geräte, mittels denen Leuchtmittel, wie beispielsweise LEDs, Gasentladungslampen, Hochdrucklampen etc. auf vorab definierte Dimmpegel (Dimmstufen) gesteuert und/oder geregelt werden können.

Im Bereich von Gasentladungslampen werden derartige elektronische Betriebsgeräte allgemein elektronisches Vorschaltgerät (EVG) genannt.

Es ist aus dem Stand der Technik bekannt, beispielsweise derartige elektronische Vorschaltgeräte (EVGs), um nur ein Beispiel für Leuchtmittelbetriebsgeräte zu nennen, über einen Digitalbus anzusteuern. Es wird diesbezüglich auf die Literatur im Zusammenhang mit dem sogenannten DALI (Digital Addressable Light Interface)- Standard verwiesen. Dabei werden also einem Leuchtmittelbetriebsgerät an einem Steuereingang digitale Signale zugeführt, die u.a. Dimm-Sollwerte vorgeben können.

Da ein Benutzer nicht immer gewillt ist, zu einem Leuchtmittelbetriebsgerät mit einer derartigen Digitalschnittstelle auch die zugehörige Buseinrichtung einschließlich digitalem Kontroller zu verwenden, sind aus dem Stand der Technik auch Betriebsgeräte bekannt, bei denen an einem derartigen digitalen Steuereingang (digitale Schnittstelle) wahlweise eben ein Digitalsignal oder aber auch ein mittels eines mit Netzspannung versorgten Tasters erzeugtes Signal angelegt werden kann. In diesem Fall kann also ein Benutzer, wenn er denn die digitale Peripherie nicht verwinden möchte, den Digitalsteuereingang des Betriebsgeräts mittels Tasterbetätigung ansteuern. Dabei wird bspw. die Zeitdauer sowie die Wiederholrate der Tasterbetätigung durch das angeschlossene Betriebsgerät als Signal zum Ein-/Ausschalten oder zum Dimmen ausgewertet.

Ein Beispiel für ein derartiges Betriebsgerät, an dessen digitalem Steuereingang auch ein von einem mit Netzspannung versorgten Taster oder Schalter herrührendes Signal anlegbar ist, ist beispielsweise in dem deutschen Gebrauchsmuster DE 297 24 657 angeführt.

Weitere Systeme zur Ansteuerung von Leuchtmitteln sind aus folgenden Patentschriften bekannt: US 5 668 446 A, US 5 357 170 A, US 2003/179578 A1. Insbesondere offenbart US 5 668 446 A ein Verfahren zur Ausführung in einem Lichtsteuersystem, bei dem ein Leuchtmittelbetriebsgerät über einen ersten Anschluss mit einer Versorgungsspannung versorgt wird und über einen zweiten Anschluss ein Ausgangssignal eines Bewegungsmelders empfängt, wobei das Verfahren die folgenden Schritte aufweist: Auswerten des Ausgangssignals des Bewegungsmelders, der abhängig von der Erfassung einer Bewegung entweder ein Signal ausgibt, oder kein Ausgangssignal ausgibt, und Ansteuerung von Ausgängen zum Anschluss von Leuchtmitteln auf einen von mehreren vorgegebenen Dimmpegeln abhängig von dem Ausgangssignal des Bewegungsmelders, wobei wenigstens einer der vorgegebenen Dimmpegel programmierbar ist.

Die vorliegende Erfindung stellt sich nunmehr die Aufgabe, die aus dem Bereich von Taster und Schalter gewonnene Erkenntnis, dass an einem Digital-Steuereingang eines Leuchtmittelbetriebsgeräts bei entsprechender Auslegung auch mittels einer Netzspannung erzeugte Signale angelegt werden können, auf andere Bereiche zu übertragen.

Die Erfindung hat dabei insbesondere erkannt, dass sich ein derartiger Ansatz auch auf den Bereich der Bewegungserkennung mittels eines Bewegungsmelders übertragen läßt.

Die genannte Aufgabe wird genauer gesagt durch die Merkmale der unabhängigen Ansprüche gelöst. Die abhängigen Ansprüche bilden den zentralen Gedanken der Erfindung in besonders vorteilhafter Weise weiter.

Erfindungsgemäß wird also ein Verfahren zur Ansteuerung von elektronisch gesteuerten Leuchtmittelbetriebsgeräten vorgeschlagen. Ein typischer Beispiel für ein derartiges Leuchtmittelbetriebsgerät ist ein elektronisches Vorschaltgerät (EVG) für Gasentladungslampen. Erfindungsgemäß wird ein Ausgangssignal eines mit einer Versorgungsspannung verbundenen Bewegungsmelders ausgewertet. Abhängig von dem Ausgangssignal des Bewegungsmelders wird dann das elektronisch gesteuerte Leuchtmittelbetriebsgerät auf einen von mehreren vorgegebenen Dimmpegel angesteuert.

Das Ausgangssignal des Bewegungsmelders wird dabei in einem Steuereingang des Betriebsgeräts erfasst, der getrennt von der Spannungsversorgung des Leuchtmittelbetriebsgeräts vorgesehen ist.

Der Steuereingang kann dabei so ausgebildet sein, dass an ihm wahlweise ein Digitalsignal oder ein Netzspannungssignal angelegt werden kann.

Gemäß der vorliegenden Erfindung werden vorab wenigstens zwei unterschiedliche Dimmstufen (Dimmpegel) in einem Leuchtmittelbetriebsgerät vorprogrammiert. Abhängig von einem Steuersignal, das dem Leuchtmittelbetriebsgerät zugeführt wird, werden dann selektiv eine der beiden Dimmstufen angesteuert. Beide Dimmstufen geben dabei eine Lichtleistung von mehr als 0% an.

Gemäß der vorliegenden Erfindung ist ein Verfahren zur Ansteuerung von elektronisch gesteuerten Leuchtmittelbetriebsgeräten vorgesehen, wobei in einem definierten Raum eine Bewegung erfasst wird. Wenn eine Bewegung positiv erfasst wird, wird ausgehend von einem Ruhewert das Leuchtmittelbetriebsgerät auf einen von dem Ruhewert verschiedenen Betriebssollwert angesteuert, wobei der Betriebssollwert einen im Vergleich zum Ruhewert vergrößerte Lichtleistung der angeschlossenen Leuchtmittel angibt.

Der Betriebssollwert kann dabei automatisch während einer definierten Zeitdauer beibehalten werden, bevor wieder der Ruhewert angesteuert wird.

Der Ruhewert und/oder der Betriebssollwert sind dabei einstellbar bzw. programmierbar. Der Ruhewert kann dabei auf einen Wert von mehr als 0% Lichtleistung eingestellt werden.

Ein weiterer Aspekt der vorliegenden Erfindung bezieht sich auf Leuchtmittelbetriebsgerät, das einen Steuereingang aufweist. In dem Betriebsgerät sind dabei zwei unterschiedliche Dimmpegel abgelegt, die jeweils größer als 0% sind und auf die ein angeschlossenes Leuchtmittel abhängig von einem an den Steuereingang anliegenden Signal gesteuert und/oder geregelt wird.

Der Steuereingang kann dabei derart ausgelegt sein, dass wahlweise ein digitales Signal mit einem ersten Spannungspegel oder ein von einer Netzspannung herstammendes Signal mit einem davon unterschiedlichen Pegel anlegbar ist. Beide genannten Signalarten können durch das Betriebsgerät ausgewertet und zur Ansteuerung eines angeschlossenen Leuchtmittels umgesetzt werden. Weitere Vorteile, Merkmale und Eigenschaften der vorliegenden Erfindung sollen nunmehr Bezug nehmend auf die einzige Figur der in der Anlage beigefügten Zeichnungen erläutert werden.
Figur 1 zeigt ein erstes erfindungsgemäßes System zur Ansteuerung eines Leuchtmittels, und
Figur 2 zeigt ein weiteres Ausführungsbeispiel, bei dem ein Bewegungsmelder mit einem Leuchtmittelbetriebsgerät über einen Digitalbus kommuniziert.

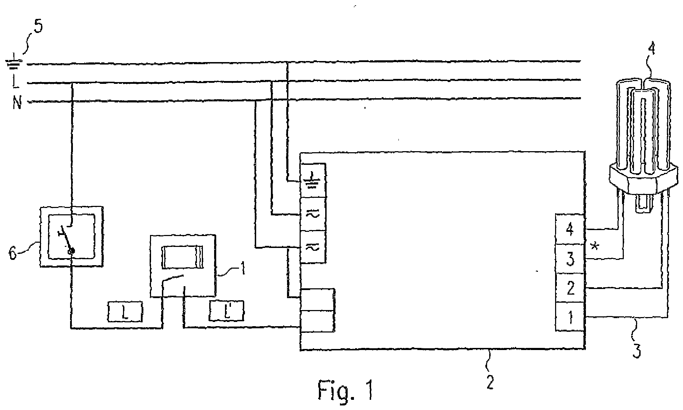

In Figur 1 sind schematisch dargestellt ein grundsätzlich bekannter Bewegungsmelder 1, ein elektronisches Vorschaltgerät (EVG) 2 sowie an dem Ausgang 3 des EVGs zwei angeschlossene Leuchtmittel 4. Es wurde bereits einführend darauf hingewiesen, dass das EVG 2 nur ein Beispiel für ein Betriebsgerät für Leuchtmittel darstellt und sich die vorliegende Erfindung zwanglos auf beliebige andere Leuchtmittel und somit über Gasentladungslampen hinaus anwenden läßt.

Das dargestellte EVG 2 weist drei Anschlüsse PE, L, N auf, die mit der Erde, der Phase sowie dem Nullleiter einer Spannungsversorgung 5 verbindbar sind.

Darüber hinaus weist das dargestellte EVG auch eine Schnittstelle mit zwei Anschlüssen D1, D2 auf. Diese Schnittstelle D1, D2 kann, wie sich bereits durch die Kurzbezeichnung der Anschlüsse ergibt, dazu ausgelegt sein, dass ihr digitales Signale beispielsweise gemäß dem DALI-Standard zugeführt werden, um somit dem EVG 2 Befehle zu übermitteln bzw. um an diesen Anschlüssen von dem EVG 2 aus Befehle an einen angeschlossenen Bus, wie beispielsweise dem DALI-Bus zu übermitteln, wenn eine bidirektionale Kommunikation vorgesehen ist.

Optional können also die Anschlüsse D1, D2 auch zur Entgegennahme von Digitalbefehlen mit nachfolgender Signalverarbeitung ausgebildet sein. Auf jeden Fall sind die Ansprüche D1, D2 so ausgebildet, dass an sie Signale angelegt werden können, die von einer Versorgungsspannung wie beispielsweise der Netzspannung herstammen. In dem dargestellten Beispiel ist der Anschluß D2 mit dem Nullleiter N der Spannungsversorgung 5 verbunden.

Zwischen dem anderen Signalsteuereingang D1 des EVGs 2 und dem Phasenleiter L der Spannungsversorgung 5 ist ein handelsüblicher Bewegungsmelder 1 geschaltet (die Funktion des ebenfalls dazwischen geschalteten optionalen Timers 6 wird später erläutert werden). Diesem Bewegungsmelder 1 wird also eingangsseitig die Phase L der Versorgungsspannung 5 zugeführt. Das Ausgangssignal des Bewegungsmelders 1, das also dem Steuereingang D1 des EVGs 2 zugeführt wird, wird mit L' bezeichnet.

An dem Steuereingang D1 können also im wesentlichen zwei unterschiedliche Signale anliegen, nämlich eines für den Fall der Erfassung einer Bewegung durch den Bewegungsmelder 1 sowie ein davon unterschiedliches Signal für den Fall, dass der Bewegungsmelder 1 keine Bewegung erkennt.

Insbesondere können diese beiden Signalzustände, die dem Ausgangssignal des Bewegungsmelder entsprechen, wie folgt definiert sein:
Bei Erfassung einer Bewegung durch den Bewegungsmelder 1 schließt dieser die Verbindung zwischen dem Phasenleiter L und dem Steuereingang D1, so dass an dem Steuereingang D1 der Signalpegel des Phasenleiters L anliegt. In dem EVG 2 ist vorab ein definierter Dimmpegel abgelegt, der durch das EVG 2 angesteuert wird, wenn durch Anliegen des Phasenleiters L an dem Steuereingang D1 das Erkennen einer Bewegung durch den Bewegungsmelder 1 wiedergegeben wird.

Andererseits, wenn der Bewegungsmelder 1 keine Bewegung in den von ihm überwachten Bereich erkennt, ist gemäss diesem Ausführungsbeispiel die Verbindung zwischen dem Steuereingang D1 und dem Phasenleiter L der Spannungsversorgung 5 getrennt, so dass an dem Steuereingang D1 keine Spannung anliegt. Für diesen Fall, der also durch das EVG 2 als Nichterkennen einer Bewegung interpretiert werden kann, kann in dem EVG 2 ein zweiter Dimmwert vorprogrammiert sein, der im folgenden Ruhewert entsprechend der Nichterkennung einer Bewegung bezeichnet werden wird. Dieser Ruhewert kann insbesondere ein im Vergleich zu dem Betriebssollwert im Falle einer Erkennung einer Bewegung niedriger Dimmpegel sein.

Ein typischer Anwendungsfall für ein derartiges System zur Ansteuerung von Leuchtmitteln sind beispielsweise Treppenhäuser oder Flure. In vorteilhafter Weise sind dabei neben dem Leuchtmittelbetriegsgerät und dem Bewegungsmelder keine weiteren Steuereinheiten notwendig.

Wenn durch den Bewegungsmelder 1 eine Bewegung erkannt wird und dadurch beispielsweise die Netzspannung an dem Steuereingang D1 des EVGs 2 anliegt, kann dieses beispielsweise ein angeschlossenes Leuchtmittel automatisch auf 100% Lichtleistung ansteuern. Wenn andererseits keine Bewegung erkannt wird, und somit an dem Steuereingang D1 das Signal '0' anliegt (spannungslos), kann auf einen niedrigeren Wert wie beispielsweise 5% Lichtleistung gesteuert werden.

Wenn also der Bewegungsmelder die Anwesenheit einer Person beispielsweise in einem Treppenhaus erkennt, wird automatisch das Treppenhaus mit einer ausreichenden Lichtleistung, bspw. 100%, beleuchtet.

Nach einer vorbestimmten Zeitdauer, die beispielsweise in dem EVG 2 programmiert oder eingestellt sein kann, oder aber der (wiederum ggf. Einstellbaren) Verzögerungszeit des Bewegungsmelders 1 nach Erkennung einer Bewegung entspricht, unterbricht der Bewegungsmelder wieder die Verbindung mit der Steuerphase L. Somit wird das angeschlossene Leuchtmittel wieder auf den Ruhewert angesteuert, der einem wesentlich niedrigeren Niveau im Vergleich zu dem Betriebssollwert entspricht.

Wie gesagt, sowohl der Ruhewert wie auch der Betriebssollwert bei Erkennung einer Bewegung können an dem EVG 2 einstellbar bzw. programmierbar sein.

Es kann weiterhin vorgesehen sein, dass neben dem Bewegungsmelder auch ein Zeitgeber (Timer) 6 vorgeschaltet ist, der Nutzungszeiträume vorgibt (beispielsweise morgens, abends, Dämmerung, etc.) in denen die Funktion des Bewegungsmelders aktiv geschaltet ist. Nur innerhalb des Nutzungszeitraums verbindet also der Timer die Steuerphase L mit dem Bewegungsmelder, so dass nur während des Nutzungszeitraums der Bewegungsmelder wiederum eine Verbindung zwischen dem Steuereingang D1 und der Steuerphase L herstellen kann.

Diese Nutzungszeiträume können indessen bspw. auch in dem Betriebsgerät oder in dem Bewegungsmelder selbst eingestellt sein.

Die Einstellung der beiden Dimmpegel (Ruhewert, Betriebssollwert) kann über beispielsweise über eine Schnittstelle erfolgen. Dies kann im Betrieb, während der Installation, während der Fertigung etc. ausgeführt werden. Die Schnittstelle kann auch drahtlos ausgebildet sein.

Das EVG kann auch dazu ausgebildet sein, automatisch den Anschluß eines Bewegungsmelders zu erkennen. Dies ist beispielsweise dann vorteilhaft, wenn das EVG ein solches mit kontinuierlichem Dimmbereich bzw. quasi kontinuierlichem Dimmbereich von beispielsweise 1% bis 100% ist, das bei Erkennen des Anschlusses eines Bewegungsmelders an den Anschlüssen D1, D2 automatisch auf einen 2-Dimmlevel-Betrieb umschaltet.

Ein typischer Anwendungsfall ist also das Erkennen von Personen zu bestimmten Zeitdauern (Morgenstunden, Abendstunden) in einem Treppenhaus etc.

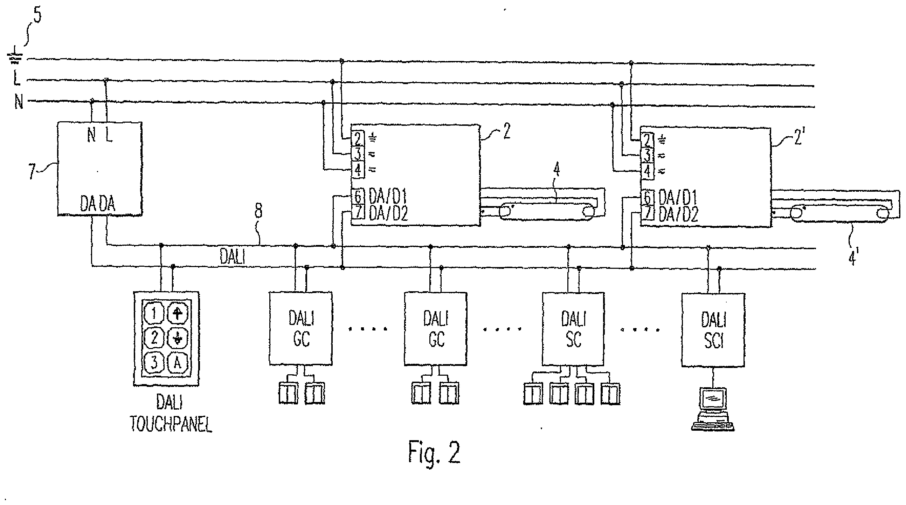

In Figur 2 ist dargestellt, dass ein Bewegungsmelder 7 auch Element eines digitalen Bussystems (bspw. gemäss dem DALI-Standard) sein kann. In diesem Fall kann der Bewegungsmelder 7 angeschlossenen Betriebsgeräten 2, 2' über eine Busleitung 8 die Information der Erfassung einer Bewegung in Form eines Digitalsignals übermitteln. Diese Information kann, wie bspw. bei dem DALI-Standard vorgesehen, adressiert sein und ein bzw. eine Gruppe von angeschlossenen Betriebsgeräten mit Leuchtmitteln 4, 4' mit der entsprechenden Adresse ansprechen.

Zusätzlich können natürlich auch bspw. die im DALI-System üblichen digitalen Controller (DALI GC, DALI SC), Bedienelemente (DALI Touchpanel) und Schnittstellen (DALI SCI) angeschlossen sein. Über diese Schnittstellen kann bspw. eine Programmierung der oben beschriebenen Pegel und Zeitdauern erfolgen.

## Patentansprüche

1. Verfahren zur Ausführung durch ein elektronisch gesteuertes Leuchtmittelbetriebsgerät, wobei das Leuchtmittelbetriebsgerät über einen ersten Anschluss mit einer Versorgungsspannung versorgt wird und über einen zweiten Anschluss ein Ausgangssignal eines Bewegungsmelders empfängt, wobei das Verfahren die folgenden Schritte aufweist:
• Auswerten des Ausgangssignals des mit derselben Versorgungsspannung verbundenen Bewegungsmelders, der abhängig von der Erfassung einer Bewegung entweder die Versorgungsspannung als Ausgangssignal durchlässt, oder kein Ausgangssignal ausgibt, und
• Ansteuerung von Ausgängen zum Anschluss von Leuchtmitteln auf einen von mehreren vorgegebenen Dimmpegeln abhängig von dem Ausgangssignal des Bewegungsmelders,
wobei wenigstens einer der vorgegebenen Dimmpegel programmierbar ist.

2. Verfahren nach Anspruch 1, wobei das Verfahren den folgenden Schritt umfasst: Erkennen eines Anschlusses des Bewegungsmelders an das Leuchtmittelbetriebsgerät und nachfolgendes Umstellen eines Betriebs von einem Betrieb mit mehr als zwei vorgegebenen Dimmpegeln auf einem Betrieb mit nur zwei vorgegebenen Dimmpegeln.

3. Verfahren nach Anspruch 1 oder 2,
wobei das Ausgangssignal des Bewegungsmelders an einem Steuereingang einer digitalen Schnittstelle des Leuchtmittelbetriebsgeräts erfasst wird.

4. Verfahren nach Anspruch 3,
wobei das Ausgangssignal des Bewegungsmelders an dem Steuereingang des Leuchtmittelbetriebsgeräts erfasst wird, der getrennt von der Spannungsversorgung des Leuchtmittelbetriebsgeräts vorgesehen ist.

5. Leuchtmittelbetriebsgerät, wobei das Leuchtmittelbetriebsgerät über einen ersten Anschluss mit einer Versorgungsspannung versorgt wird und über einen zweiten Anschluss ein Ausgangssignal eines Bewegungsmelders empfängt, wobei das Leuchtmittelbetriebsgerät dazu ausgestaltet ist, eines der Verfahren nach Ansprüchen 1 - 4 durchführen.

## Claims

1. Method for execution by an electronically controlled light operating device, wherein the light operating device is supplied with a supply voltage via a first connection and receives an output signal of a motion detector via a second connection, wherein the method comprises the following steps:
• evaluation of the output signal of the motion detector connected to the same supply voltage, said motion detector, as a function of the detection of a motion, either transmitting the supply voltage as an output signal or outputting no output signal, and
• driving of outputs for connecting lights to one of a plurality of predetermined dimming levels as a function of the output signal of the motion detector,
wherein at least one of the predetermined dimming levels is programmable.

2. Method according to Claim 1,
wherein the method comprises the following step: detection of a connection of the motion detector to the light operating device, and subsequently switching an operation from an operation with more than two predetermined dimming levels to an operation with only two predetermined dimming levels.

3. Method according to Claims 1 or 2,
wherein the output signal of the motion detector is detected at a control input of a digital interface of the light operating device.

4. Method according to Claim 3,
wherein the output signal of the motion detector is detected at the control input of the light operating device, which is provided separately from the voltage supply of the light operating device.

5. Light operating device, wherein the light operating device is supplied with a supply voltage via a first connection and receives an output signal of a motion detector via a second connection, wherein the light operating device is designed to implement one of the methods according to Claims 1 - 4.

## Revendications

1. Procédé pour une exécution par un appareil de fonctionnement de moyens d'éclairage à commande électronique, l'appareil de fonctionnement de moyens d'éclairage étant alimenté en tension d'alimentation via un premier raccordement et recevant un signal de sortie d'un détecteur de mouvement via un deuxième raccordement, le procédé présentant les étapes suivantes:
• évaluation du signal de sortie du détecteur de mouvement raccordé à la même tension d'alimentation qui, en fonction de la détection d'un mouvement, laisse passer la tension d'alimentation en guise de signal de sortie ou n'émet aucun signal de sortie et
• commande de sorties pour le raccordement de moyens d'éclairage sur l'un parmi plusieurs seuils d'atténuation prédéfinis en fonction du signal de sortie du détecteur de mouvement,
au moins l'un des seuils d'atténuation prédéfinis étant programmable.

2. Procédé selon la revendication 1,
le procédé comprenant l'étape suivante : détection d'un raccordement du détecteur de mouvement à l'appareil de fonctionnement de moyens d'éclairage et changement subséquent d'un fonctionnement d'un fonctionnement à plus de deux seuils d'atténuation prédéfinis à un fonctionnement à seulement deux seuils d'atténuation prédéfinis.

3. Procédé selon la revendication 1 ou 2,
le signal de sortie du détecteur de mouvement étant détecté au niveau d'une entrée de commande d'une interface numérique de l'appareil de fonctionnement de moyens d'éclairage.

4. Procédé selon la revendication 3,
le signal de sortie du détecteur de mouvement étant détecté au niveau de l'entrée de commande de l'appareil de fonctionnement de moyens d'éclairage, qui est prévue séparée de l'alimentation en tension de l'appareil de fonctionnement de moyens d'éclairage.

5. Appareil de fonctionnement de moyens d'éclairage, l'appareil de fonctionnement de moyens d'éclairage étant alimenté en tension d'alimentation via un premier raccordement et recevant un signal de sortie d'un détecteur de mouvement via un deuxième raccordement, l'appareil de fonctionnement de moyens d'éclairage étant conçu pour réaliser l'un des procédés selon les revendications 1 à 4.
